# FASCICULE DE BREVET EUROPEEN

(11) **EP 3 688 416 B1**
(45) Date de publication et mention de la délivrance du brevet: **03.07.2024**
(21) Numéro de dépôt: 18778962.3
(22) Date de dépôt: 06.09.2018
(51) Int. Cl.: G01D 5/14

(54) **MODULE DE DÉTECTION D'UNE POIGNÉE ROTATIVE D'UN VÉHICULE MOTORISE**
SENSORMODUL FÜR EINEN DREHGRIFF EINES KRAFTFAHRZEUGS
DETECTION MODULE FOR A ROTARY HAND OPERATED THROTTLE OF A MOTORISED VEHICLE

(30) Priorité: 25.09.2017 FR 1758824
(43) Date de publication de la demande: 05.08.2020
(73) Titulaire: Moving Magnet Technologies, 25000 Besançon (FR)
(72) Inventeur: DELBAERE, Michaël, 25720 Avanne-Aveney (FR); RONNAT, Yannick, 25320 Vorges les Pins (FR)
(74) Mandataire: IP Trust
(86) Numéro de dépôt international: PCT/FR2018/052179
(87) Numéro de publication internationale: WO 2019/058044

(56) Documents cités:
- EP-A1- 2 610 585
- EP-A1- 3 059 552
- FR-A1- 2 951 265
- US-A1- 2007 090 827
- US-A1- 2012 242 331

## Description

### DOMAINE TECHNIQUE DE L'INVENTION

L'invention se rapporte aux véhicules motorisés disposant d'une poignée orientable angulairement afin de gérer, par exemple, l'accélération (accélération/décélération) et la vitesse du véhicule. Dans le cas des motocycles à moteur à explosion, ces poignées, souvent appelées « poignées de gaz », peuvent présenter un capteur de la position angulaire lorsqu'elles ne comportent pas de câbles reliant mécaniquement la poignée à l'organe de gestion de flux des gaz d'admission (en anglais, ride-by-wire).

La présente invention concerne plus particulièrement un module de détection de la position angulaire de poignée pouvant être utilisé dans le domaine cité sur tout véhicule motorisé par moteur à explosion ou par moteur électrique.

### ETAT DE LA TECHNIQUE ANTERIEURE

**On** connait déjà dans l'art antérieur le document JPH0350905 qui présente un tel capteur de position intégré à l'intérieur d'une poignée et situé à l'extrémité de ladite poignée. L'élément de détection est un potentiomètre.

Cette réalisation présente plusieurs inconvénients : un potentiomètre met en oeuvre des éléments frottants et le positionnement en bout de guidon n'est pas pratique pour l'installation du capteur, avec la nécessité de prolonger les fils d'alimentation et de retour de signal.

Le document EP2610585 présente une grande amélioration du principe par une intégration plus compacte, en amont du guidon et utilisant une sonde à effet Hall détectant le champ magnétique émis par un secteur de bague aimanté de manière radiale. Ce document propose aussi l'intégration d'un ressort de rappel de position à l'intérieur du volume défini par l'aimant tournant.

Cette réalisation présente néanmoins des défauts : le volume d'aimant utilisé est important, la sonde à effet Hall, bien que positionnée à l'intérieur de l'aimant est sensible à un champ magnétique perturbateur extérieur par l'absence d'une structure de blindage intégrée.

**On** connait aussi le document EP2716891 qui présente une configuration similaire au document précédent mais avec une intégration du ressort de rappel en position différente et une culasse ferromagnétique portant un aimant dont la direction d'aimantation n'est pas précisée, permettant un blindage magnétique partiel diminuant l'influence d'un éventuel champ magnétique extérieur au niveau de la sonde à effet Hall.

Cette réalisation souffre d'une mauvaise compacité axiale et d'une certaine sensibilité à un champ magnétique externe, malgré la culasse.

On connait enfin le document US6879150 qui présente plusieurs configurations de capteurs de position magnétiques pouvant être intégrés dans une poignée d'accélérateur, et utilisant une détection d'amplitude de champ à partir d'un aimant à polarisation bipolaire. Outre le fait que seule l'amplitude du champ est mesurée, ce qui le rend directement sensible à toute perturbation magnétique extérieure, la rotation du champ magnétique au point de mesure ne prend que 2 valeurs discrètes, 90° et -90°, de par la présence de fer et quoiqu'il en soit toujours inférieure à 180° et ne peut jamais dépasser cette valeur.

### EXPOSE DE L'INVENTION

La présente invention vise à pallier aux inconvénients des solutions de l'art antérieur en proposant un module de détection de la position utilisant une sonde de détection de champ magnétique intérieure associée à un aimant tournant, compact axialement et permettant une meilleure insensibilité aux champs magnétiques externes.

Pour ce faire, la présente invention propose un module de détection de la position angulaire destiné notamment à une poignée d'accélérateur utilisant un aimant ayant une direction d'aimantation variable selon la direction circonférentielle de détection de manière à réaliser une grande rotation de l'angle du champ magnétique le long de la course mécanique au niveau d'une sonde magnétosensible mesurant la direction du champ, et non l'amplitude du champ, et sur une amplitude angulaire supérieure à celle permise à l'aide d'un aimant à aimantation radiale. La sonde magnétosensible calculant l'angle du champ magnétique, l'augmentation de la rotation totale de l'angle de ce champ sur l'excursion angulaire diminue l'influence d'un champ magnétique externe.

L'invention a aussi pour but de permettre l'intégration de différentes couches de blindage magnétique renforçant encore cette insensibilité aux champs magnétiques externes.

Plus particulièrement, l'invention propose un module détection d'une poignée rotative destiné à venir se fixer sur le tube d'un guidon d'un véhicule à côté de ladite poignée et comprenant un aimant de forme cylindrique, une sonde de détection du champ magnétique produit par ledit aimant, un support de ladite sonde, un circuit imprimé duquel est solidaire ladite sonde, un support dudit aimant et une collerette servant de boitier audit module, ladite sonde magnétosensible détectant la rotation de champ magnétique émis par ledit aimant et étant solidaire dudit guidon, lesdits support d'aimant et aimant étant solidaires de ladite poignée, en ce que lesdits support d'aimant et aimant forment une cavité de manière à ce que la surface radiale intérieure de l'aimant soit positionnée à l'extérieur et en regard de ladite sonde magnétosensible, **caractérisé** en ce que ledit aimant présente une direction d'aimantation variable continûment de manière à ce que la rotation totale de l'angle du champ magnétique, généré par ledit aimant au point de mesure pendant la rotation mécanique de la poignée soit supérieure à 180°.

Préférentiellement, ledit aimant présente une largeur angulaire, considérée depuis le centre du guidon, sensiblement égale à la course angulaire de ladite poignée mais cette largeur peut aussi être, considérée depuis le centre du guidon, sensiblement égale à 360°.

Pour maximiser l'effet visé par l'invention, la rotation de l'angle du champ magnétique peut sensiblement être égale à 3 fois ladite rotation mécanique complète de ladite poignée.

**Selon** un autre aspect de l'invention, mais toujours dans le but de diminuer la sensibilité du module de détection aux champs magnétique extérieurs, l'invention concerne un module détection d'une poignée rotative destiné à venir se fixer sur le tube d'un guidon d'un véhicule à côté de ladite poignée et comprenant un aimant de forme cylindrique, une sonde de détection du champ magnétique produit par ledit aimant, un support de ladite sonde, un circuit imprimé duquel est solidaire ladite sonde, un support dudit aimant et une collerette servant de boitier audit module, ladite sonde magnétosensible détectant la rotation de champ magnétique émis par ledit aimant et étant solidaire dudit guidon, lesdits support d'aimant et aimant étant solidaires de ladite poignée, en ce que lesdits support d'aimant et aimant forment une cavité de manière à ce que la surface radiale intérieure de l'aimant soit positionnée à l'extérieur et en regard de ladite sonde magnétosensible, caractérisé en ce qu'il comprend un ressort de rappel élastique positionné radialement et extérieurement audit support de l'aimant.

Dans ce cas de figure, ledit ressort peut avantageusement être en un matériau magnétique ou ressort réalisé par coopération magnétique d'un aimant de rappel avec ledit aimant.

Dans tous les cas de figure, il est possible que ledit support d'aimant supporte un blindage magnétique sur sa périphérie et aussi qu'un blindage magnétique soit positionné à l'intérieur dudit boitier et solidairement audit boitier.

Ce blindage peut présenter une largeur angulaire sensiblement égale à celle de l'aimant ou une largeur angulaire sensiblement égale à 360°.

Afin de maximiser l'effet de blindage magnétique, la collerette peut être réalisée en un matériau magnétique.

L'invention trouvera une application privilégiée pour une poignée pour le montant sur le tube d'un guidon d'un véhicule comportant un aimant permanent solidaire d'une première partie de ladite poignée et un capteur magnétosensible solidaire d'une deuxième partie de ladite poignée, lesdites parties étant mobiles en rotation l'une par rapport à l'autre, caractérisé en ce que ledit aimant présente une forme semi-cylindrique, le module de détection comprenant un circuit imprimé duquel est solidaire ladite sonde, un support dudit aimant et une collerette servant de boitier audit module, ladite sonde magnétosensible détectant la rotation de champ magnétique émis par ledit aimant et étant solidaire dudit guidon, lesdits support d'aimant et aimant étant solidaires de ladite poignée, en ce que lesdits support d'aimant et aimant forment une cavité de manière à ce que la surface radiale intérieure de l'aimant soit positionnée à l'extérieur et en regard de ladite sonde magnétosensible, ledit aimant présentant une direction d'aimantation variable continûment de manière à ce que la rotation totale de l'angle du champ magnétique, généré par ledit aimant au point de mesure pendant la rotation mécanique de la poignée soit supérieure à 180°.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, deux vues isolées d'un guidon pour véhicule motorisé pouvant accueillir un module de détection selon l'invention,
- les figures 2a, 2b et 2c, respectivement une vue de face, une vue (A) selon un plan de coupe transversale et une vue (B) suivant un plan de coupe longitudinale, d'un guidon comme présenté en figure 1,
- les figures 3a et 3b, deux vues de coupe transversale d'un module de détection suivant deux modes différents de réalisation d'aimantation à direction variable,
- la figure 4, un graphique d'évolution de la rotation de champ et de la non-linéarité le long de la course mécanique, typiquement obtenus avec un module de détection selon l'invention,
- les figures 5, 6 et 7, des vues en coupe transversale et longitudinale de modes de réalisation différents de blindages magnétiques intégrés à un module de détection selon l'invention,
- les figures 8a, 8b, 9a, 9b, des vues en coupe transversale et longitudinale de variantes de réalisation avec culasse magnétique,
- les figures 10a et 10b, des vues en coupe respectivement transversale et longitudinale d'un mode particulier de réalisation de blindage à l'aide du ressort mécanique,
- les figures 11a et 11b, des vues respectivement en coupe transversale et longitudinale (D) d'une variante de réalisation avec un effet de ressort magnétique,
- les figures 12a et 12b, des vues respectivement en coupe transversale et longitudinale (E) d'une variante de réalisation où la sonde de détection présente une orientation différente des précédents cas,
- les figures 13a et 13b, des vues respectivement en coupe transversale et longitudinale d'une variante de réalisation où il y a deux sondes de détection,
- les figures 14a et 14b, des vues respectivement en coupe transversale et longitudinale d'une variante de réalisation où l'aimant est de forme parallélépipédique,
- la figure 15, une vue de coupe transversale d'une variante de réalisation où l'aimant présente une largeur angulaire différente de celle présentée dans les autres modes de réalisation
- la figure 16, deux vues en perspective d'un schéma de l'utilisation d'un module suivant l'invention pour un joystick de commande.

### DESCRIPTION DETAILLEE D'UN MODE DE REALISATION

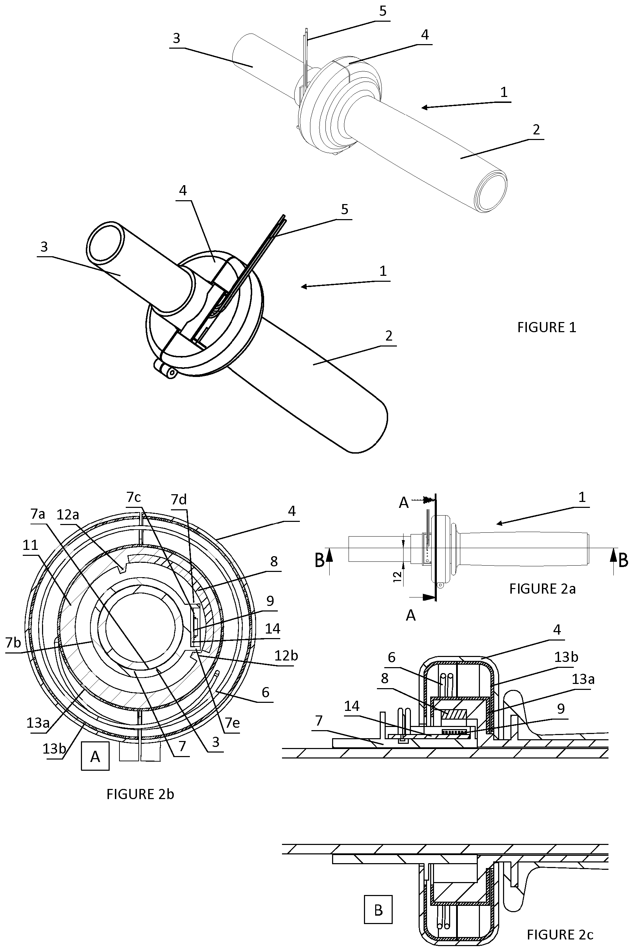

La figure 1 représente deux vues isolées d'un même exemple de guidon (1) d'un véhicule motorisé pouvant recevoir un module de détection selon l'invention. Ce guidon (1) est composé d'une poignée (2) rotative relativement au tube de guidon (3) et qui sert à commander l'accélération du véhicule, ainsi que d'une collerette (4), faisant office de boitier, contenant un module de détection comme décrit par la présente invention, et d'un faisceau (5) de câbles électriques destiné à alimenter ledit module de détection et à sortir le signal d'information donné par ledit module de détection. La forme, la position et l'orientation des éléments montrés ne sont là qu'à titre indicatif et peuvent varier suivant les véhicules.

La figure 2a reprend une vue de côté d'un guidon qui est coupée par deux plans A et B, la vue de ces plans étant donnée respectivement en figures 2b et 2c. Ces figures permettent d'apprécier les différents éléments principaux ainsi que leur positionnement relatif qui composent un module de détection de position angulaire tel que décrit par la présente invention. Ces éléments sont positionnés à l'intérieur de la collerette (4).

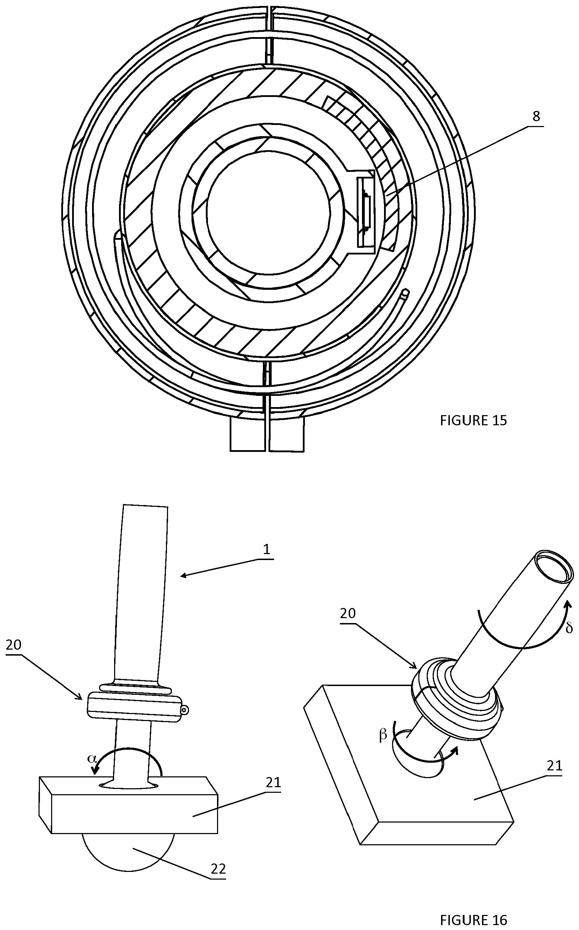

On retrouve, du plus intérieur ou plus extérieur : le guidon (1) qui porte un support de sonde (7), ce support (7) portant un circuit imprimé (14) sur lequel repose une sonde de détection (9) de l'orientation d'un champ magnétique émis par l'aimant permanent (8). L'aimantation de cet aimant est importante et décrite plus loin. Cet aimant (8) est ici sous la forme d'un secteur angulaire dont la largeur angulaire est ici voisine de 120° sans que cette largeur ne soit limitative comme décrit par exemple en figure 15 où l'aimant présente une largeur angulaire de 80°.

L'aimant (8) présente une forme de tuile avec une direction d'aimantation variable continûment de manière à ce que la rotation totale de l'angle du champ magnétique, généré par ledit aimant (8) au point de mesure pendant la rotation mécanique de la poignée (2) soit supérieure à 180°. Cette solution permet d'augmenter la résolution du module de détection en transformant une rotation mécanique de faible amplitude, par exemple 80° à une rotation magnétique de plus forte amplitude, par exemple 180° ou 270°.

L'aimantation continument variable est réalisée de manière connue par une tête d'aimantation. La rotation de la direction d'aimantation dans un aimant peut être déterminée par l'homme de métier, à partir d'un aimant polarisé, en appliquant les enseignements de la technique qui sont par exemple décrits dans la publication scientifique IEEE « Characterization of permanent magnet magnetization » par le Dr. Laure Arbenz et al.

Avantageusement, cette largeur angulaire correspond sensiblement à la course de la poignée (2). L'aimant (8) est porté par un support d'aimant (11) qui peut être en matière amagnétique ou magnétique et qui présente deux butées (12a, 12b) limitant la course angulaire de la poignée (2) venant en contact avec le support de sonde (7) dans l'une ou l'autre extrémité de course. La présence de ces butées n'est pas essentielle à l'invention et celles-ci peuvent aussi bien se trouver sur une autre partie de la poignée ou du guidon. De même, le support de sonde (7) n'est pas nécessairement l'élément permettant de coopérer avec les butées (12a, 12b). La surface radiale intérieure de l'aimant (8) est en regard de la sonde (9) pendant la rotation de la poignée (2) relativement au tube (3).

Dans l'exemple de réalisation décrit en référence à la figure 2b, la poignée intégrant le module de détection de position rotative est constituée par un support (7) cylindrique en une matière plastique présentant une surface intérieure (7a) complémentaire de la section extérieure du tube de guidon, pour permettre un montage par coulissement sur le tube de guidon (3) puis une solidarisation par un système connu, par exemple un collier de serrage. Ce support cylindrique (7) entoure le tube de guidon (3) de manière à ne pas pouvoir tourner par rapport à celui-ci. Ce support (7) présente une surface extérieure (7b) cylindrique à l'exception d'une zone définissant un logement (7c) dont le fond est perpendiculaire à la direction radiale. Ce logement (7c) est ouvert en direction opposée du tube de guidon (3) dans lequel est logé le circuit imprimé (14) sur lequel est montée la sonde de Hall (9). La section du logement (7c) correspond à la section du circuit imprimé (14) et sa profondeur est en fonction de la hauteur du circuit imprimé muni de la sonde de Hall, afin de venir affleurer la surface intérieure de l'aimant (8). Les flancs (7d, 7e) du logement (7c) viennent en butée contre les épaulements (12a ; 12b) s'étendant radialement à la surface du manchon (11) sur lequel est monté l'aimant semi-tubulaire (8). Ce design de butée mécanique est donné à titre d'exemple.

Les flancs (7d, 7e) interagissent ainsi avec ces épaulements (12a ; 12b) pour délimiter la course rotative à une valeur comprise entre 75° et 85°, généralement 80°.

Un ressort de rappel (6) ramène de manière connue la position de la partie rotative de la poignée dans une position de repos.

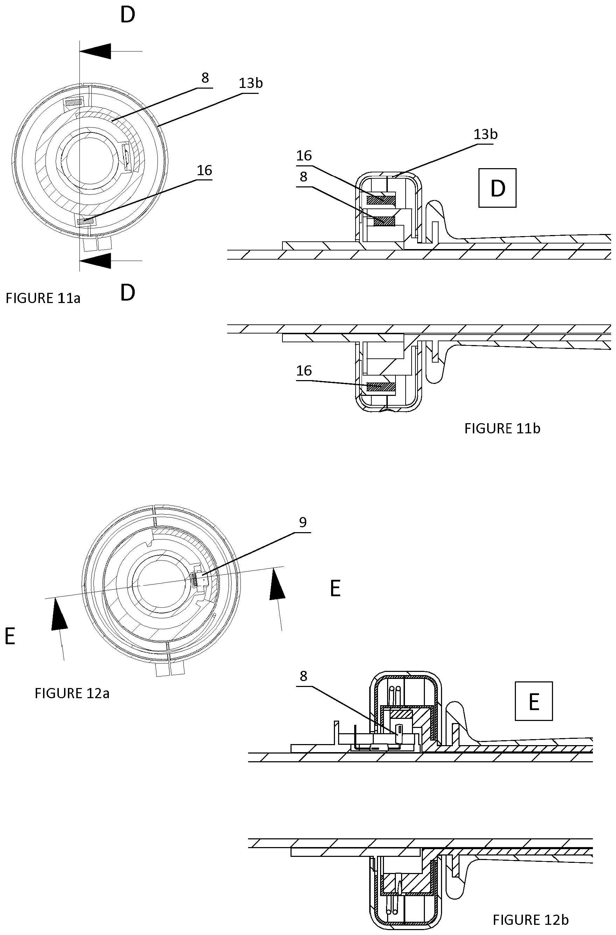

Dans une variante préférée de réalisation, la sonde (9) présente sa plus grande surface en regard de la surface radiale intérieure de l'aimant (8). Cette orientation n'est cependant pas limitative et peut être différente comme explicité en figures 12a et 12b.

Dans ce premier exemple de réalisation, le support d'aimant (11) porte sur son pourtour extérieur, un premier blindage magnétique (13a) sous la forme d'une tôle ferromagnétique fine enroulée ou emboutie sur le support d'aimant (11) qui sert à canaliser un champ magnétique éventuel extérieur au module de détection. Ce premier blindage (13a) confère au module de détection une certaine immunité aux champs extérieurs mais la performance peut être améliorée par l'utilisation d'un second blindage magnétique (13b) porté à l'intérieur de la collerette (4). Ce second blindage (13b) est aussi sous la forme d'une fine tôle ferromagnétique enroulée. Afin d'améliorer l'efficacité de ces blindages (13a, 13b), ils peuvent présenter des extensions axiales et radiales afin d'entourer l'aimant (8) mais en laissant une ouverture intérieure pour laisser l'aimant en vis-à-vis de la sonde (9).

Dans l'espace séparant radialement les blindages (13a et 13b) est avantageusement positionné un ressort mécanique (6) qui permet le retour en position de la poignée (2), une fois que celle-ci a été relâchée par l'utilisateur. Le nombre de spires de ce ressort mécanique (6) n'est pas limitatif et illustré seulement à des fins d'exemple.

L'ensemble du module de détection ainsi configuré confère une grande compacité axiale, relativement à la forme étendue de la poignée (2), et permet de conserver une grande disponibilité pour le positionnement de la poignée (2) sur l'une des extrémités et pour l'ajout d'un module de boutons de commande sur l'autre extrémité ou encore de laisser une grande liberté au designer pour habiller le module de détection, tout en permettant de conférer un blindage satisfaisant aux perturbations magnétiques extérieures.

Cette insensibilité aux perturbations magnétiques est améliorée par la caractéristique principale de l'invention qui est de réaliser une direction d'aimantation tournante dans l'aimant (8) afin de générer un champ magnétique dont la rotation, au point de mesure dans la sonde (9) est importante. Dans le cas d'un aimant où la direction d'aimantation est radiale, le champ magnétique au point de mesure -dans la sonde (9)- subit une rotation sensiblement voisine de la rotation de la poignée aux effets de bord près. Au contraire, en faisant tourner la direction de l'aimantation dans l'aimant ( 8), il a été remarqué que le champ magnétique au point de la sonde (9) effectue une rotation bien supérieure à la rotation de la poignée. Ainsi, par la mesure de cet angle de rotation magnétique lors de la rotation de la poignée, la sonde (9) détecte une rotation supérieure à celle de la poignée. Par une mise à l'échelle permettant de déduire la rotation effective de la poignée, cela permet astucieusement de réduire l'influence de tout champ magnétique extérieur. Si par ailleurs ces artifices ne suffisaient pas à absorber la totalité de la perturbation magnétique, il est alors possible d'envisager l'emploi d'une sonde de mesure différentielle qui permet alors d'annuler le mode commun du champ magnétique perturbateur résiduel mesuré aux 2 points de mesure de la sonde.

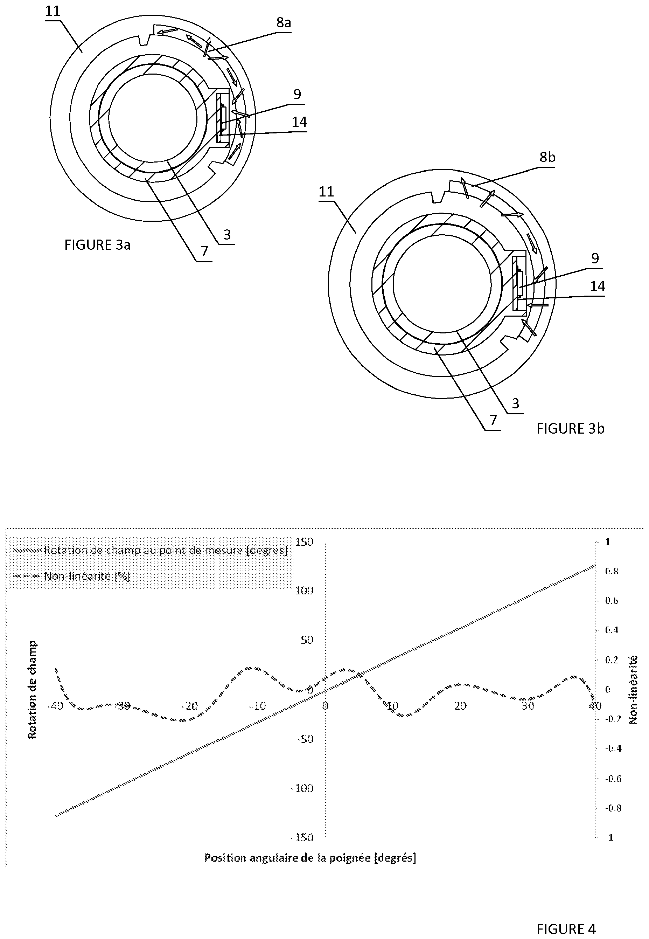

Dans les exemples des figures 3a et 3b, où l'on retrouve en partie les éléments décrits précédemment, les directions d'aimantation des aimants (8a et 8b) sont montrées à chaque position dans l'aimant à l'aide des flèches pleines et sont respectivement voisines de 400° et 240°, valeurs qui sont données à titre d'exemple. Il est à souligner que dans sa partie centrale, l'aimant ne présente pas forcément un vecteur d'aimantation tangentiel comme présenté ici. La rotation de la direction d'aimantation est continue le long de l'aimant dans la circonférence et identique suivant la hauteur du cylindre constitué, c'est-à-dire parallèlement à l'axe du guidon (1). Le choix de la valeur de rotation de la direction d'aimantation est avant tout dicté par le niveau d'immunité aux champs magnétiques extérieurs souhaités et la non-linéarité du signal voulue. Une rotation élevée de la direction d'aimantation (typiquement supérieure à 360°) implique une bonne insensibilité aux perturbations magnétiques externes. Selon l'invention, la rotation totale de la direction d'aimantation sera telle que la rotation totale de l'angle du champ magnétique généré par ledit aimant (8) au point de mesure est supérieure à 180°. Dans certains cas, elle sera avantageusement supérieure à trois fois la rotation réelle de la poignée (par exemple supérieure à 240° pour une course de poignée de 80°).

Dans l'exemple de la figure 4, sont tracées les évolutions de rotation du champ magnétique au point de mesure pour une rotation de champ total de 220° et la non-linéarité du signal sur un angle mécanique de rotation de poignée de 80° (+/-40° autour d'une position médiane). Dans cet exemple, on voit ainsi que pour une rotation complète donnée, le champ magnétique au point de mesure connait une rotation presque trois fois plus importante. Cela est un avantage contre les champs magnétiques extérieurs car minimisant l'influence de ceux-ci dans la non-linéarité du signal. En effet par une règle de trois, ces 220° de rotation effectivement détectés, sont ramenés à une course de 80°. Les perturbations éventuelles subiront aussi cette mise à l'échelle et donc une diminution.

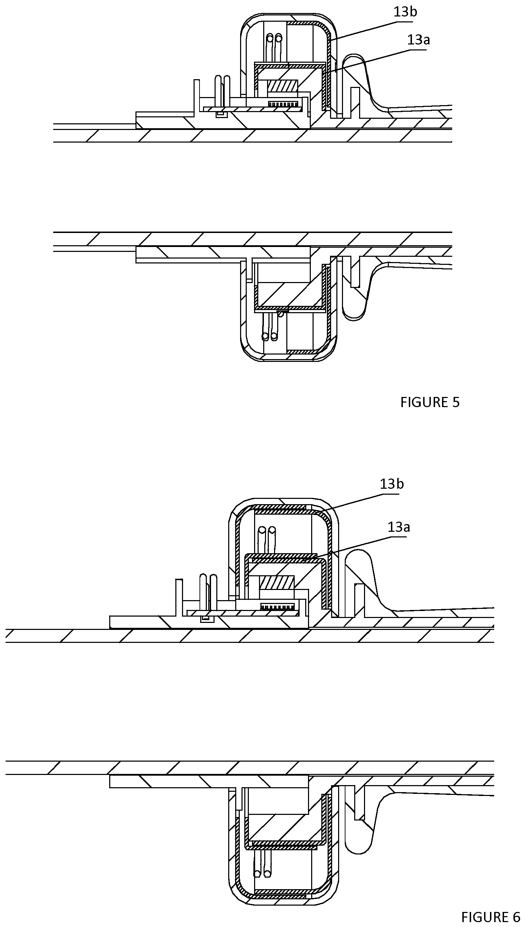

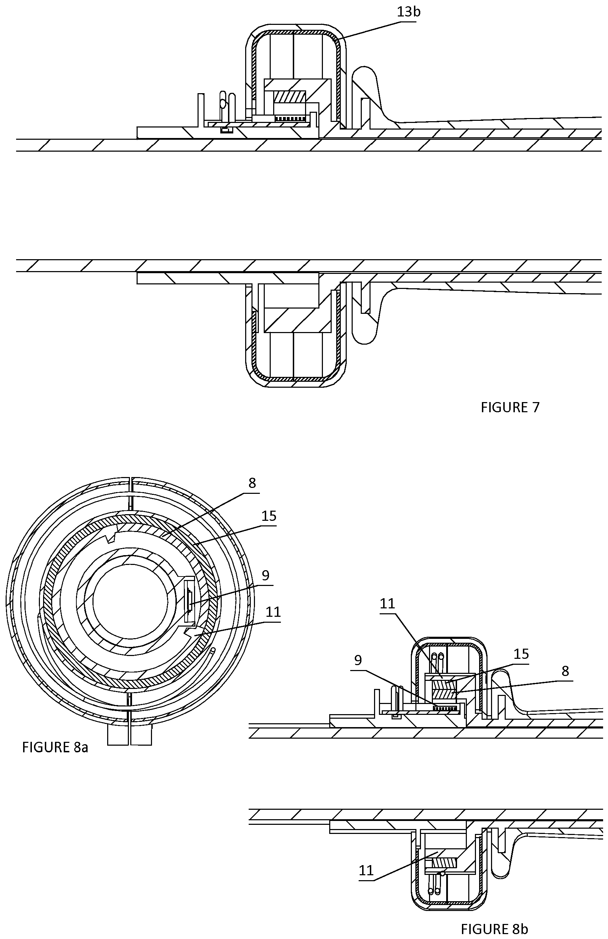

Afin d'ajuster la non-sensibilité du module de détection aux champs extérieurs qui peuvent s'appliquer, il est possible de configurer des blindages de manières différentes. Les figures 2b et 2c donnent une première façon de réaliser le blindage, les figures 5, 6 et 7 donnent d'autres exemples. En figures 5, le second blindage (13b) est uniquement positionné, axialement, dans la partie en amont du module de détection en direction de la poignée. En figures 6, les premier et second blindages (13a, 13b) se chevauchent radialement au niveau axial où sont positionnés la sonde (9) et l'aimant (8). En figure 7, il existe le seul second blindage (13b) comme élément de blindage.

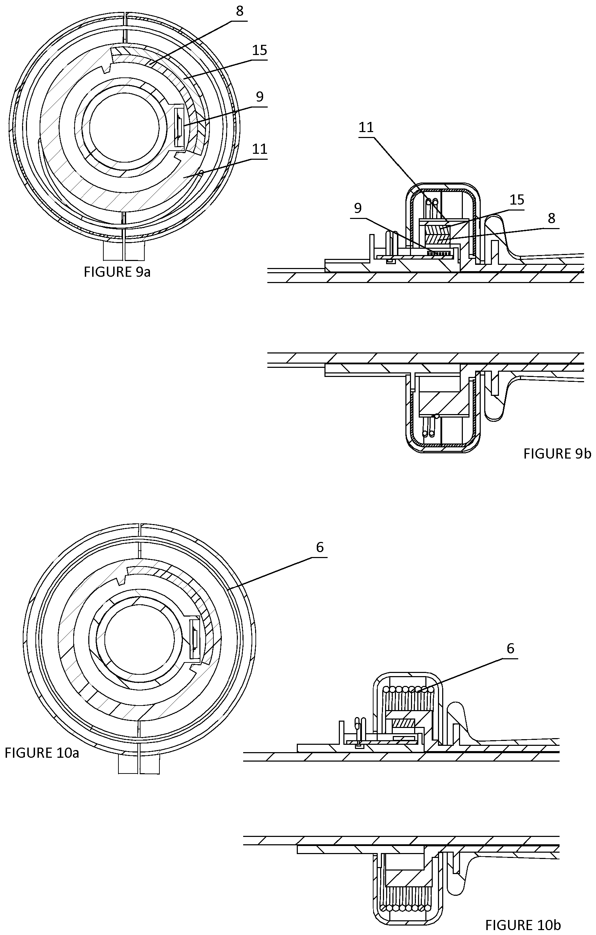

En association avec les blindages (13a, 13b) décrit ci-dessus, il peut être envisagé d'intégrer une culasse ferromagnétique (15) derrière l'aimant (8) et en support de celui-ci. Par exemple, cette culasse (15) peut servir de support à l'aimant (8) en complément du support d'aimant (11) précédemment décrit, et comme montré en figures 8a et 8b. Dans ce cas de figure, la culasse entoure complètement le tube (3), le support d'aimant (11) intégrant cette culasse (15). Cette culasse (15) peut aussi être d'une largeur angulaire égale à celle de l'aimant (8) comme montré en figures 9a et 9b ou légèrement supérieure à celle de l'aimant (8). Cette culasse (15) permet deux bénéfices : augmenter le flux d'induction magnétique détecté au niveau de la sonde (9) et participer au blindage du flux magnétique venant éventuellement d'une perturbation externe.

Les figures 10a et 10b présentent un mode de réalisation particulier où les blindages additionnels sont absents mais le ressort mécanique (6) présente une configuration à spires jointives et est étendu axialement le long du module de détection. En choisissant un matériau ferromagnétique pour la réalisation de ce ressort (6), il est ainsi possible de bénéficier d'un blindage magnétique efficace contre les champs magnétiques éventuels extérieurs et d'un élément de rappel élastique qui ramène la poignée en sa position initiale.

En alternative à l'utilisation d'un ressort mécanique (6) précédemment présenté, il peut aussi être envisagé une variante de réalisation intégrant en place de ce ressort mécanique (6) un effet ressort par une action magnétique entre l'aimant (8) et un aimant de rappel (16), situé radialement à l'extérieur de l'aimant (8) comme indiqué dans les figures 11a et 11b. Dans ce cas de figure, l'usage du second blindage (13b) est préféré, toujours dans le but de permettre une protection contre des champs magnétiques extérieurs éventuels. L'aimantation de l'aimant de rappel (16) peut varier dans son orientation et son amplitude en fonction de l'effort de rappel souhaité mais aussi de l'influence sur la sonde (9).

Les figures 12a et 12b illustrent simplement le cas de figure, donné à titre d'exemple, où la sonde (9) présente une orientation différente de celle illustrée précédemment. En effet, dans cet exemple, la sonde (9) présente une orientation telle que sa plus grande surface est perpendiculaire à l'axe de la poignée (2).

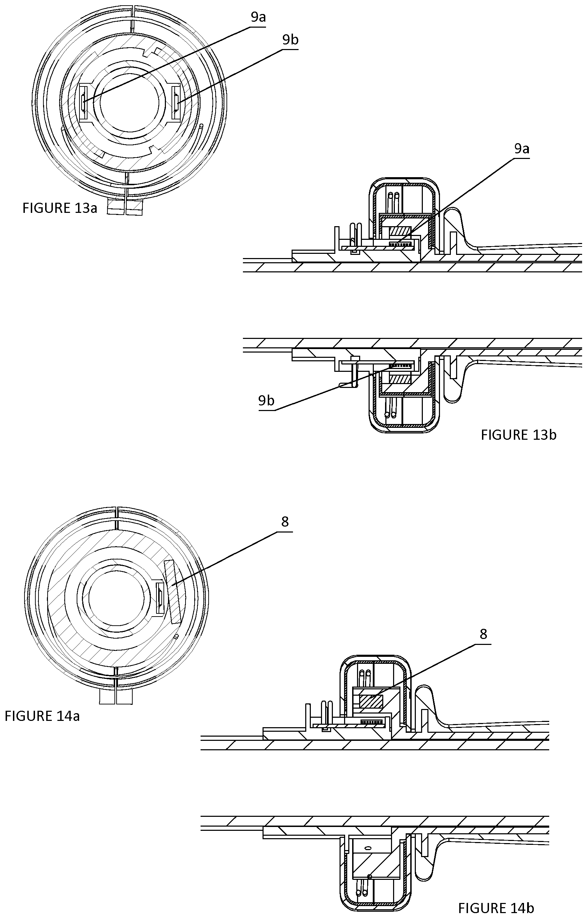

De même que l'orientation, le nombre de sondes (9) utilisées peut varier et notamment, comme illustrées en figures 13a et 13b, deux sondes (9a) et (9b) peuvent être utilisées afin de fournir, par exemple, une redondance de signal en cas de défaillance de l'une ou l'autre des sondes (9a, 9b). Dans le cas d'exemple présenté, les deux sondes (9a, 9b) sont positionnées à 180° l'une de l'autre sans que cet angle ne soit limitatif, chaque sonde est en regard d'une tuile d'aimant. L'aimant peut alors même être constitué d'une bague unique pour simplifier la fabrication.

Enfin, dans l'exemple des figures 14a et 14b, il peut être envisagé d'utiliser un aimant (8) de forme parallélépipédique sans sortir du cadre de l'invention. La forme de l'aimant n'est ainsi pas critique mais sa largeur angulaire et sa direction d'aimantation sont importantes et doivent respecter ce qui est décrit plus haut avec une direction d'aimantation évolutive et tournante. La forme globale de l'aimant est définie comme cylindrique, c'est-à-dire une surface réglée dont les génératrices sont parallèles entre elles et ici parallèles à l'axe du guidon.

La figure 16 montre que le module de détection (20) selon l'invention peut aussi être intégré dans un joystick pour contrôler la rotation relative (δ) d'un guidon (1) par rapport à une rotule mécanique (22) permettant par ailleurs le déplacement en rotation suivant plusieurs angles, par exemple (α, β), relativement à la plateforme (21) d'accueil du joystick. Ce dernier peut être à destination d'un véhicule de tourisme, de manutention, ou récréatif pour ne citer que quelques exemples non limitatifs.

Dans l'ensemble des figures et des cas d'exemple décrits ci-dessus, il est évident que chaque variante peut être combinée à une autre, notamment en termes de blindage, nombre de sondes, taille et forme de l'aimant, sans sortir du cadre de cette invention.

## Revendications

1. Module de détection de la position angulaire d'une poignée (2) rotative destiné à venir se fixer sur le tube (3) d'un guidon (1) d'un véhicule à côté de ladite poignée (2) et comprenant un aimant (8) de forme cylindrique, une sonde (9) de détection du champ magnétique produit par ledit aimant (8), un support (7) de ladite sonde, un circuit imprimé (14) duquel est solidaire ladite sonde (9), un support (11) dudit aimant et une collerette (4) servant de boitier audit module, ladite sonde (9) magnétosensible détectant la rotation de champ magnétique émis par ledit aimant (8) et étant solidaire dudit guidon (1), lesdits support d'aimant (11) et aimant (8) étant solidaires de ladite poignée (2), en ce que lesdits support d'aimant (11) et aimant (8) forment une cavité de manière à ce que la surface radiale intérieure de l'aimant (8) soit positionnée à l'extérieur et en regard de ladite sonde (9) magnétosensible, **caractérisé en ce que** ledit aimant (8) présente une direction d'aimantation variable continûment de manière à ce que la rotation mécanique de la poignée (2) inférieure à 120° conduit à la rotation totale de l'angle du champ magnétique, généré par ledit aimant (8) au point de mesure, supérieure à 180°.

2. Module de détection de la position angulaire d'une poignée (2) rotative selon la revendication 1 **caractérisé en ce que** ledit aimant (8) présentant une largeur angulaire, considérée depuis le centre du guidon (1), sensiblement égale à la course angulaire de ladite poignée (2).

3. Module de détection de la position angulaire d'une poignée (2) rotative selon la revendication 1 **caractérisé en ce que** ledit aimant (8) présentant une largeur angulaire, considérée depuis le centre du guidon (1), sensiblement égale à 360°.

4. Module de détection de la position angulaire d'une poignée (2) rotative selon la revendication 1 **caractérisé en ce que** la rotation de l'angle du champ magnétique est sensiblement égale à 3 fois ladite rotation mécanique complète de ladite poignée (2).

5. Module de détection de la position angulaire d'une poignée (2) rotative selon la revendication 1 **caractérisé en ce que** la rotation mécanique de la poignée (2) inférieure à 90° conduit à la rotation totale de l'angle du champ magnétique, généré par ledit aimant (8) au point de mesure, supérieure à 180°.

6. Module de détection de la position angulaire d'une poignée (2) rotative selon la revendication 1,
ledit aimant (8) présente une largeur angulaire, considérée depuis le centre du guidon (1), sensiblement égale à la course angulaire de ladite poignée (2),
**caractérisé en ce qu'**il comprend un ressort (6, 16) de rappel élastique positionné radialement et extérieurement audit support de l'aimant.

7. Module de détection de la position angulaire d'une poignée rotative selon la revendication 6 **caractérisé en ce que** ledit ressort (6) est en un matériau magnétique.

8. Module de détection de la position angulaire d'une poignée rotative selon la revendication 6 **caractérisé en ce que** ledit ressort (6) est réalisé par coopération magnétique d'un aimant de rappel (16) avec ledit aimant (8) .

9. Module de détection de la position angulaire d'une poignée rotative selon l'une quelconque des revendications précédentes **caractérisé en ce que** ledit support d'aimant supporte un blindage magnétique (13a) sur sa périphérie.

10. Module de détection de la position angulaire d'une poignée rotative selon l'une quelconque des revendications précédentes **caractérisé en ce qu'**un blindage (13b) magnétique est positionné à l'intérieur dudit boitier et solidairement audit boitier.

11. Module de détection de la position angulaire d'une poignée rotative selon les revendications 9 ou 10 **caractérisé en ce que** ledit blindage présente une largeur angulaire sensiblement égale à celle de l'aimant.

12. Module de détection de la position angulaire d'une poignée rotative selon les revendications 9 ou 10 **caractérisé en ce que** ledit blindage présente une largeur angulaire sensiblement égale à 360°.

13. Module de détection de la position angulaire d'une poignée rotative selon l'une quelconque des revendications précédentes **caractérisé en ce que** la collerette (4) est en un matériau magnétique.

14. Poignée pour le montant sur le tube (3) d'un guidon (1) d'un véhicule comportant un aimant permanent (8) solidaire d'une première partie de ladite poignée et un capteur magnétosensible (9) solidaire d'une deuxième partie de ladite poignée, lesdites parties étant mobiles en rotation l'une par rapport à l'autre, **caractérisé en ce que** ledit aimant (8) présente une forme semi-cylindrique, le module de détection comprenant un circuit imprimé (14) duquel est solidaire ladite sonde (9), un support (11) dudit aimant et une collerette (4) servant de boitier audit module, ladite sonde (9) magnétosensible détectant la rotation de champ magnétique émis par ledit aimant (8) et étant solidaire dudit guidon (1), lesdits support d'aimant (11) et aimant (8) étant solidaires de ladite poignée (2), **en ce que** lesdits support d'aimant (11) et aimant (8) forment une cavité de manière à ce que la surface radiale intérieure de l'aimant (8) soit positionnée à l'extérieur et en regard de ladite sonde (9) magnétosensible, ledit aimant (8) présentant une direction d'aimantation variable continûment de manière à ce que la rotation totale de l'angle du champ magnétique, généré par ledit aimant (8) au point de mesure pendant la rotation mécanique de la poignée (2) inférieure à 120°, soit supérieure à 180°.

## Patentansprüche

1. Modul zum Erfassen der Winkelposition eines Drehgriffs (2), das dazu bestimmt ist, an dem Rohr (3) eines Lenkers (1) eines Fahrzeugs neben dem Griff (2) befestigt zu werden, und umfassend einen Magneten (8) mit zylindrischer Form, eine Sonde (9) zum Erfassen des Magnetfelds, das durch den Magneten (8) produziert wird, einen Träger (7) der Sonde, eine gedruckte Schaltung (14), an der die Sonde (9) fest verbunden ist, einen Träger (11) des Magneten und einen Kragen (4), der als Gehäuse für das Modul dient, wobei die magnetisch beeinflussbare Sonde (9) die Drehung des Magnetfelds erfasst, das durch den Magneten (8) emittiert wird, und mit dem Lenker (1) fest verbunden ist, wobei die Magnetträger (11) und der Magnet (8) mit dem Griff (2) fest verbunden sind, dass die Magnetträger (11) und der Magnet (8) einen Hohlraum ausbilden, sodass die innere radiale Oberfläche des Magneten (8) außerhalb und gegenüber der magnetisch beeinflussbaren Sonde (9) positioniert ist,
**dadurch gekennzeichnet, dass** der Magnet (8) eine kontinuierlich veränderliche Magnetisierungsrichtung aufweist, sodass die mechanische Drehung des Griffs (2) von weniger als 120° zu der Gesamtdrehung des Magnetfelds, das durch den Magneten (8) an der Messspitze erzeugt wird, von mehr als 180° führt.

2. Modul zum Erfassen der Winkelposition eines Drehgriffs (2) nach Anspruch 1 , **dadurch gekennzeichnet, dass** der Magnet (8) eine Winkelbreite aufweist, die von der Mitte des Lenkers (1) aus gesehen im Wesentlichen gleich dem Winkelweg des Griffs (2) ist.

3. Modul zum Erfassen der Winkelposition eines Drehgriffs (2) nach Anspruch 1 , **dadurch gekennzeichnet, dass** der Magnet (8) eine Winkelbreite aufweist, die von der Mitte des Lenkers (1) aus gesehen im Wesentlichen gleich 360° ist.

4. Modul zum Erfassen der Winkelposition eines Drehgriffs (2) nach Anspruch 1, **dadurch gekennzeichnet, dass** die Drehung des Winkels des Magnetfelds im Wesentlichen gleich dem 3-Fachen der vollständigen mechanischen Drehung des Griffs (2) ist.

5. Modul zum Erfassen der Winkelposition eines Drehgriffs (2) nach Anspruch 1, **dadurch gekennzeichnet, dass** die mechanische Drehung des Griffs (2) von weniger als 90° zu der Gesamtdrehung des Winkels des Magnetfelds, das durch den Magneten (8) an der Messspitze erzeugt wird, von mehr als 180° führt.

6. Modul zum Erfassen der Winkelposition eines Drehgriffs (2) nach Anspruch 1, wobei der Magnet (8) eine Winkelbreite aufweist, die von der Mitte des Griffs (1) aus gesehen im Wesentlichen gleich dem Winkelweg des Griffs (2) ist, **dadurch gekennzeichnet, dass** es eine elastische Rückstellfeder (6, 16) umfasst, die radial und außerhalb des Magnetträgers positioniert ist.

7. Modul zum Erfassen der Winkelposition eines Drehgriffs nach Anspruch 6, **dadurch gekennzeichnet, dass** die Feder (6) aus einem magnetischen Material besteht.

8. Modul zum Erfassen der Winkelposition eines Drehgriffs nach Anspruch 6, **dadurch gekennzeichnet, dass** die Feder (6) durch magnetisches Zusammenwirken eines Rückstellmagneten (16) mit dem Magneten (8) hergestellt wird.

9. Modul zum Erfassen der Winkelposition eines Drehgriffs nach einem der vorstehenden Ansprüche, **dadurch gekennzeichnet, dass** der Magnetträger an seinem Umfang eine magnetische Abschirmung (13a) trägt.

10. Modul zum Erfassen der Winkelposition eines Drehgriffs nach einem der vorstehenden Ansprüche, **dadurch gekennzeichnet, dass** eine magnetische Abschirmung (13b) innerhalb des Gehäuses und fest verbunden mit dem Gehäuse positioniert ist.

11. Modul zum Erfassen der Winkelposition eines Drehgriffs nach Anspruch 9 oder 10, **dadurch gekennzeichnet, dass** die Abschirmung eine Winkelbreite aufweist, die im Wesentlichen gleich der des Magneten ist.

12. Modul zum Erfassen der Winkelposition eines Drehgriffs nach Anspruch 9 oder 10, **dadurch gekennzeichnet, dass** die Abschirmung eine Winkelbreite von im Wesentlichen 360° aufweist.

13. Modul zum Erfassen der Winkelposition eines Drehgriffs nach einem der vorstehenden Ansprüche, **dadurch gekennzeichnet, dass** der Kragen (4) aus einem magnetischen Material besteht.

14. Griff zum Montieren an dem Rohr (3) eines Lenkers (1) eines Fahrzeugs, der einen Permanentmagneten (8), der mit einem ersten Teil des Griffs fest verbunden ist, und einen magnetisch beeinflussbaren Sensor (9) vorweist, der mit einem zweiten Teil des Griffs fest verbunden ist, wobei die Teile relativ zueinander drehbar sind, **dadurch gekennzeichnet, dass** der Magnet (8) eine halbzylindrische Form aufweist, das Erfassungsmodul umfassend eine gedruckte Schaltung (14), mit der die Sonde (9) fest verbunden ist, einen Träger (11) des Magneten und einen Kragen (4), der als Gehäuse für das Modul dient, wobei die magnetisch beeinflussbare Sonde (9) die Drehung des Magnetfelds erfasst, das durch den Magneten (8) emittiert wird, und mit dem Lenker (1) fest verbunden ist, wobei die Magnetträger (11) und der Magnet (8) mit dem Griff (2) fest verbunden sind, **dass** die Magnetträger (11) und der Magnet (8) einen Hohlraum ausbilden, sodass die radiale innere Oberfläche des Magneten (8) außerhalb und gegenüber der magnetisch beeinflussbaren Sonde (9) positioniert ist, wobei der Magnet (8) eine Magnetisierungsrichtung aufweist, die kontinuierlich veränderbar ist, sodass die Gesamtdrehung des Winkels des Magnetfelds, das durch den Magneten (8) an dem Messpunkt während der mechanischen Drehung des Griffs (2) von weniger als 120° erzeugt wird, größer als 180° ist.

## Claims

1. Module for detecting the angular position of a rotatable handle (2), which module is intended to be fixed to the tube (3) of a vehicle handlebar (1) next to said handle (2) and comprises a cylindrical magnet (8), a probe (9) for detecting the magnetic field produced by the magnet (8), a support (7) for the probe, a printed circuit (14) to which the probe (9) is rigidly connected, a support (11) for the magnet and a collar (4) which serves as a housing for said module, the magnetically sensitive probe (9) detecting the rotation of the magnetic field emitted by the magnet (8) and being rigidly connected to the handlebar (1), said magnet support (11) and magnet (8) being rigidly connected to the handle (2), in that said magnet support (11) and magnet (8) form a cavity so that the inner radial surface of the magnet (8) is positioned outside and facing the magnetically sensitive probe (9), **characterized in that** the magnet (8) has a continuously variable direction of magnetization such that mechanical rotation of the handle (2) of less than 120° leads to the total rotation of the angle of the magnetic field, generated by said magnet (8) at the measurement point, of greater than 180°.

2. Module for detecting the angular position of a rotatable handle (2) according to claim 1, **characterized in that** the magnet (8) has an angular width, considered from the center of the handlebar (1), that is substantially equal to the angular travel of said handle (2).

3. Module for detecting the angular position of a rotatable handle (2) according to claim 1, **characterized in that** the magnet (8) has an angular width, considered from the center of the handlebar (1), that is substantially equal to 360°.

4. Module for detecting the angular position of a rotatable handle (2) according to claim 1, **characterized in that** the rotation of the angle of the magnetic field is substantially equal to 3 times the complete mechanical rotation of said handle (2).

5. Module for detecting the angular position of a rotatable handle (2) according to claim 1, **characterized in that** mechanical rotation of the handle (2) of less than 90° leads to the total rotation of the angle of the magnetic field, generated by said magnet (8) at the measurement point, of greater than 180°.

6. Module for detecting the angular position of a rotatable handle (2) according to claim 1, the magnet (8) having an angular width, considered from the center of the handlebar (1), that is substantially equal to the angular travel of said handle (2), **characterized in that** it comprises a resilient return spring (6, 16) which is positioned radially and externally with respect to said magnet support.

7. Module for detecting the angular position of a rotatable handle according to claim 6, **characterized in that** the spring (6) is made of a magnetic material.

8. Module for detecting the angular position of a rotatable handle according to claim 6, **characterized in that** the spring (6) is produced by magnetic cooperation of a return magnet (16) with said magnet (8).

9. Module for detecting the angular position of a rotatable handle according to any one of the preceding claims, **characterized in that** the magnet support bears a magnetic shield (13a) on the periphery thereof.

10. Module for detecting the angular position of a rotatable handle according to any one of the preceding claims, **characterized in that** a magnetic shield (13b) is positioned inside said housing and is rigidly connected to the housing.

11. Module for detecting the angular position of a rotatable handle according to claims 9 or 10, **characterized in that** the shield has an angular width that is substantially equal to that of the magnet.

12. Module for detecting the angular position of a rotatable handle according to claims 9 or 10, **characterized in that** the shield has an angular width that is substantially equal to 360°.

13. Module for detecting the angular position of a rotatable handle according to any one of the preceding claims, **characterized in that** the collar (4) is made of a magnetic material.

14. Handle for mounting on the tube (3) of a vehicle handlebar (1), comprising a permanent magnet (8) which is rigidly connected to a first portion of said handle and a magnetically sensitive sensor (9) which is rigidly connected to a second portion of said handle, the portions being rotatable relative to one another, **characterized in that** the magnet (8) has a semi-cylindrical shape, the detection module comprising a printed circuit (14) to which the probe (9) is rigidly connected, a support (11) for said magnet and a collar (4) which serves as a housing for the module, said magnetically sensitive probe (9) detecting the rotation of the magnetic field emitted by the magnet (8) and being rigidly connected to the handlebar (1), said magnet support (11) and magnet (8) being rigidly connected to the handle (2), **in that** said magnet support (11) and magnet (8) form a cavity such that the inner radial surface of the magnet (8) is positioned outside and facing the magnetically sensitive probe (9), said magnet (8) having a continuously variable direction of magnetization such that the total rotation of the angle of the magnetic field, which is generated by said magnet (8) at the measurement point during the mechanical rotation of the handle (2) of less than 120°, is greater than 180°.
